# EUROPEAN PATENT APPLICATION

(11) **EP 3 421 807 A1**
(43) Date of publication of application: **02.01.2019**
(21) Application number: 17178672.6
(22) Date of filing: 29.06.2017
(51) Int. Cl.: F04D 29/051, F16C 17/04

(54) **DEVICE HAVING A SURFACE ARRANGED TO MEET ROTATING AIR**

(71) Applicant: Koninklijke Philips N.V., 5656 AE Eindhoven (NL)
(72) Inventor: Lelieveld, Mark Johannes, 5656 AE Eindhoven (NL); van Campenhout, Olaf, 5656 AE Eindhoven (NL)
(74) Representative: Steenbeek, Leonardus Johannes

(57) **Abstract**

In a device (M, F) comprising a first surface (S1) arranged to meet rotating air that rotates around a rotation axis (A), the first surface (S1) is provided with at least one ring (IR, OR) of dimples (Dp) arranged around the rotation axis (A). The device may further comprise a second surface (S2) arranged for rotating around the rotation axis (A), the rotating air being formed by an air layer between the first surface (S1) and the second surface (S2). Also the second surface (S2) may be provided with at least one ring (IR, OR) of dimples (Dp) arranged around the rotation axis (A). The at least one ring of dimples (IR, OR) may comprise at least two concentric rings (IR, OR) of dimples (Dp) around the rotation axis (A), and the dimples (Dp) on one ring (OR) may be staggered with respect to the dimples (Dp) of a neighboring ring (IR). The device may be a fan used in e.g. hair dryers, vacuum cleaners, and air processors (e.g. air conditioners, air purifiers, and hot air ovens) for processing (e.g. heating, cooling and/or filtering) air.

## Description

### FIELD OF THE INVENTION

The invention relates to a device having a surface arranged to meet rotating air, such as a fan used in e.g. hair dryers, vacuum cleaners, and air processors (e.g. air conditioners, air purifiers, and hot air ovens) for processing (e.g. heating, cooling and/or filtering) air.

### BACKGROUND OF THE INVENTION

In fans, it is a challenge to ensure that an output air volume or pressure is maximized while at least one other parameter (e.g. size, rotation speed, noise) is minimized.

### SUMMARY OF THE INVENTION

It is, inter alia, an object of the invention to provide an improved device. The invention is defined by the independent claims. Advantageous embodiments are defined in the dependent claims.

In a device comprising a first surface arranged to meet rotating air that rotates around a rotation axis in one aspect of the present invention, the first surface is provided with at least one ring of dimples arranged around the rotation axis.

Embodiments of the invention improve the efficiency of rotary fan systems by adding a defined surface texture / geometry between the rotating fan and its static counterpart.

These and other aspects of the invention will be apparent from and elucidated with reference to the embodiments described hereinafter.

### BRIEF DESCRIPTION OF THE DRAWINGS

Fig. 1 shows an embodiment of a device in accordance with the present invention;
Figs. 2A and 2B show an embodiment of a surface having dimples in accordance with the present invention;
Fig. 3 shows a geometry of a dimple for use in embodiments of the present invention.

### DESCRIPTION OF EMBODIMENTS

Embodiments of the invention use drag reducing surfaces between the fan and the motor mount to improve efficiency of the system. The drag reducing surfaces can be on the stating motor mount, on rotating fan side or both.

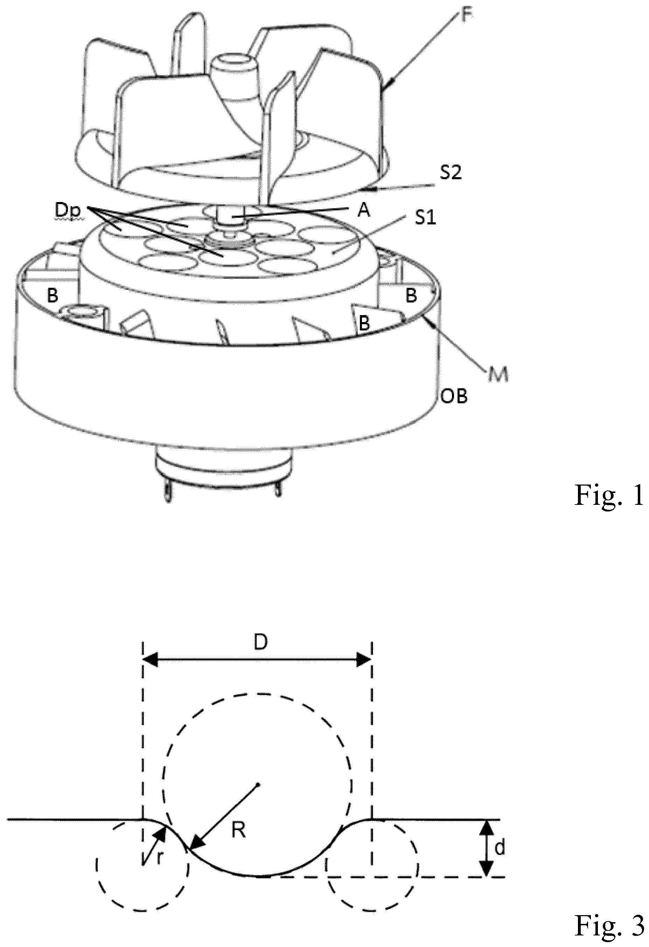

Fig. 1 shows an embodiment of a fan in accordance with the present invention. The fan has a motor mount M having a central surface S1 opposite a rotating surface S2 of the fan F. The motor mount M has blades B that connect the central surface S1 to an outer body OB of the fan. The rotating surface S2 is connected to fan blades to move the air. As a result of the rotation of the rotating surface of the fan F, also the air between the central surface S1 of the motor mount M and the rotating surface S2 of the fan F will rotate around the rotation axis of the rotating fan.

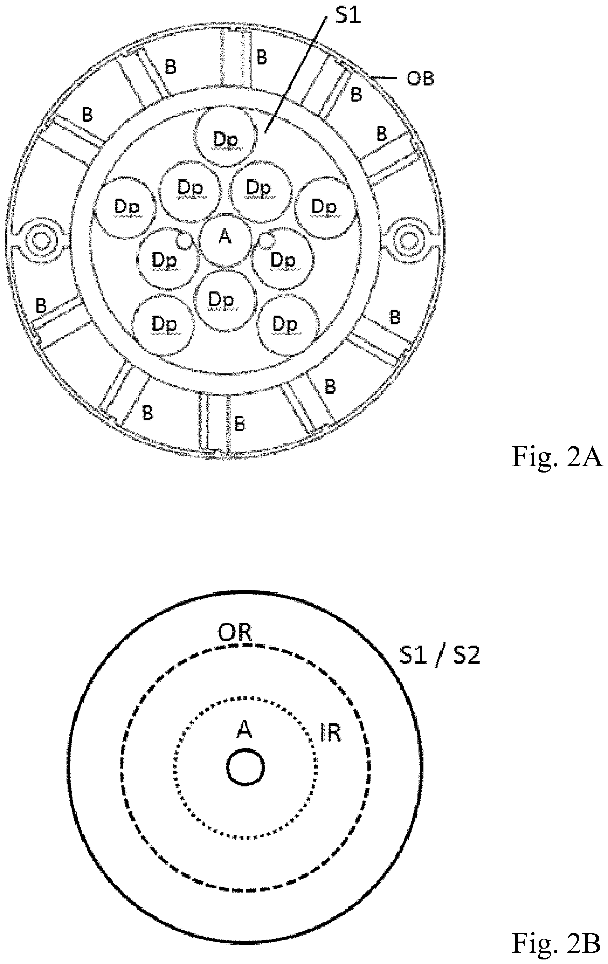

Figs. 2A and 2B show an embodiment of a surface S1 having dimples Dp in accordance with the present invention. In this embodiment, there are two concentric rings of dimples Dp of equal size. The dimples Dp are located on the surface S1 the static motor mount M in the domain between the rotating fan F and the static motor mount M. In this embodiment, this surface S1 is formed by a circle with a diameter of 55 mm, having a central rotation axis A. The dimples Dp are placed on two rings. The inner ring IR and the outer ring OR both have the same center as the static motor mount M. The dimples Dp are equally spaced on each ring and the dimples Dp on the inner ring IR are staggered with regard to the dimples Dp on the outer ring OR. In this embodiment, each ring IR, OR has the same amount of dimples Dp; in this embodiment there are 5 dimples Dp per ring. The dimple pattern is then completely defined by the following parameters: the radius of the outer ring OR is 20.68 mm, and the radius of the inner ring IR is 11.82 mm. These dimensions resulted from the application of dimples Dp to a particular fan; in another fan, different dimensions would apply. As suggested in Fig. 2B, the surface S2 of the fan F may also have been provided with dimples.

Fig. 3 shows a geometry of a dimple Dp for use in embodiments of the present invention, based on the geometry published e.g. by Tay CMJ, Khoo BC, Chew YT (2015) Mechanics of drag reduction by shallow dimples in channel flow. Phys Fluids 27(3):035,109. In an embodiment of dimples suitable for use with the embodiments of Figs. 2A and 2B, the diameter D is 13.64 mm, the depth d is 0.34 mm, and the curve radius r is 6.82 mm. The dimple radius R is defined by the dimple diameter D, the dimple depth d, and the curve radius r.

In summary, in a device M, F comprising a first surface S1 arranged to meet rotating air that rotates around a rotation axis A, the first surface S1 is provided with at least one ring IR, OR of dimples Dp arranged around the rotation axis A. The device may further comprise a second surface S2 arranged for rotating around the rotation axis A, the rotating air being formed by an air layer between the first surface S1 and the second surface S2. In an embodiment with 2 surfaces, what matters is that one surface rotates with respect to the other, resulting in air that rotates with respect to the first surface. So, in a fan embodiment, it does not really matter whether the mounter mount surface S1 or the rotating fan surface S2 is provided with dimples, and preferably both surfaces are provided with dimples. So, also the second surface S2 may be provided with at least one ring IR, OR of dimples Dp arranged around the rotation axis A. The at least one ring of dimples IR, OR may comprise at least two concentric rings IR, OR of dimples Dp around the rotation axis A, and the dimples Dp on one ring OR are preferably staggered with respect to the dimples Dp of a neighboring ring IR. The device may be a fan used in e.g. hair dryers, vacuum cleaners, and air processors (e.g. air conditioners, air purifiers, and hot air ovens) for processing (e.g. heating, cooling and/or filtering) air. Having dimples in a heated air device is also beneficial for the heat transfer coefficient.

It should be noted that the above-mentioned embodiments illustrate rather than limit the invention, and that those skilled in the art will be able to design many alternative embodiments without departing from the scope of the appended claims. If the dimples Dp are smaller, the rings may contain more than 5 dimples, there may be more than 2 rings of dimples Dp, and the dimples Dp on one ring may (e.g. IR) have a different size than the dimples Dp on another ring (e.g. OR), and the dimples Dp on one surface (e.g. S1) may differ from the dimples Dp on the other surface (e.g. S2). Preferably, the dimples Dp on the outer ring OR are larger than the dimples on the inner ring IR, as a velocity of the rotating air meeting the dimples Dp on the outer ring OR exceeds a velocity of the rotating air meeting the dimples Dp on the inner ring IR. In the claims, any reference signs placed between parentheses shall not be construed as limiting the claim. For example, the first surface (S1) in claim 1 may relate to either or both of the motor mount surface (S1) and the rotating fan surface S2. The word "comprising" does not exclude the presence of elements or steps other than those listed in a claim. The word "a" or "an" preceding an element does not exclude the presence of a plurality of such elements. The mere fact that certain measures are recited in mutually different dependent claims does not indicate that a combination of these measures cannot be used to advantage.

## Claims

1. A device (M, F) comprising a first surface (S1) arranged to meet rotating air that rotates around a rotation axis (A), **characterized in that** the first surface (S1) is provided with at least one ring (IR, OR) of dimples (Dp) arranged around the rotation axis (A).

2. A device as claimed in claim 1, wherein the device further comprises a second surface (S2) arranged for rotating around the rotation axis (A), the rotating air being formed by an air layer between the first surface (S1) and the second surface (S2).

3. A device as claimed in claim 1, wherein the first surface (S1) is arranged for rotating around the rotation axis (A), and the device further comprises a second surface (S2), the rotating air being formed by an air layer between the first surface (S1) and the second surface (S2).

4. A device as claimed in claim 2 or 3, wherein the second surface (S2) is provided with at least one ring (IR, OR) of dimples (Dp) arranged around the rotation axis (A).

5. A device as claimed in any of the preceding claims, wherein the at least one ring of dimples (IR, OR) comprises at least two concentric rings (IR, OR) of dimples (Dp) around the rotation axis (A).

6. A device as claimed in claim 5, wherein the dimples (Dp) on one ring (OR) are staggered with respect to the dimples (Dp) of a neighboring ring (IR).

7. A device as claimed in claim 5 or 6, wherein a diameter (D) of dimples (Dp) on an outer ring (OR) of dimples exceeds a diameter (D) of dimples (Dp) on an inner ring (IR) of dimples (Dp).

8. A hair care device comprising a device as claimed in any of the preceding claims.

9. A vacuum cleaner comprising a device as claimed in any of the preceding claims 1-7.

10. An air processor comprising a device as claimed in any of the preceding claims 1-7.
